# EUROPEAN PATENT APPLICATION

(11) **EP 4 223 516 A2**
(43) Date of publication of application: **09.08.2023**
(21) Application number: 21804615.9
(22) Date of filing: 28.09.2021
(51) Int. Cl.: B32B 27/18, B32B 27/00, B32B 27/16, B32B 27/30, B32B 27/32, B32B 27/40, C08J 7/046, C08K 3/015, C08L 101/00, C09D 4/02, C09D 5/00, C09D 5/14, C09D 7/40, C09D 7/61, C09D 123/00, C09D 127/06, C09D 175/04, C09D 201/00, C09J 7/29

(54) **ANTIVIRAL HARD-COAT FILM, ANTIVIRAL ADHESIVE-TREATED SHEET USING SAME, AND ANTIVIRAL VENEER**

(30) Priority: 29.09.2020 JP 2020164058; 23.03.2021 JP 2021049066
(71) Applicant: DAI NIPPON PRINTING CO., LTD., Tokyo 162-8001 (JP)
(72) Inventor: NAKAJIMA, Tomomi, Tokyo 162-8001 (JP); SUMIDA, Yosuke, Tokyo 162-8001 (JP); NETSU, Yoshiaki, Tokyo 162-8001 (JP); WADA, Masataka, Tokyo 162-8001 (JP); YOSHINAMI, Risa, Tokyo 162-8001 (JP); MORIYAMA, Koji, Tokyo 162-8001 (JP); NAKAMURA, Katsuji, Tokyo 162-8001 (JP); KUWAKO, Atsushi, Tokyo 162-8001 (JP); KATO, Akiko, Tokyo 162-8001 (JP)
(74) Representative: Müller-Boré & Partner Patentanwälte PartG mbB
(86) International application number: PCT/JP2021/035687
(87) International publication number: WO 2021/230386

(57) **Abstract**

The present invention provides an antiviral hard-coat film that is effective as a material for decorative sheets having an antiviral property and can exhibit a high reproducible antiviral property, and an antiviral adhesive-treated sheet and an antiviral decorative plate each using the antiviral hard-coat film.

The present invention provides an antiviral hard-coat film comprising a crosslinked curable resin layer in an outermost layer, wherein
(1) the crosslinked curable resin layer contains a cured product of a crosslinked curable resin and silver-containing inorganic particles; and
(2) the hard-coat film has a silver ion concentration measured by ICP-OES measurement of 0.018 µg/cm² or more.

## Description

### Technical Field

The present invention relates to an antiviral hard-coat film, and an antiviral adhesive-treated sheet and an antiviral decorative plate using the antiviral hard-coat film.

### Background Art

Conventionally, various decorative sheets have been used, for example, for surface decoration of fittings, floors, walls, and the like used for interior materials of buildings. For example, decorative sheets comprising a laminate having a base material sheet, a transparent resin layer, and a surface-protecting layer in sequence in the thickness direction are widely used. It is known, for example, to optionally provide an ornamental layer on the base material sheet, to provide a primer layer between the transparent resin layer and the surface-protecting layer in order to increase adhesiveness, or to add an ionizing radiation-curable resin as a resin component of the surface-protecting layer in order to increase the scratch resistance of the surface-protecting layer.

A decorative sheet having antiviral properties is known as an example of providing a decorative sheet with functionality. As a specific example, Patent Literature 1 discloses that "[i]n a decorative sheet for interior decoration having antiviral properties in which the silver-based inorganic additive or zinc-based inorganic additive is mixed in the coating resin of the decorative sheet outermost surface, the silver-based inorganic additive or zinc-based inorganic additive has a true specific gravity of 2.5 or less, and an average particle size of 1 um or less, and is contained in an amount of 10 to 30% in terms of solid content ratio relative to the coating resin of the decorative sheet outermost surface."

As disclosed in Patent Literature 1, there are various prior art in which the expression of the antiviral property is attempted by adding a silver-based inorganic additive to a coating resin of the outermost surface. However, in conventional decorative sheets, a sufficient antiviral property may not be obtained even if the silver-based inorganic additive is added; and although various factors such as the amount of the silver-based inorganic additive, compatibility with a coating resin, etc. have been predicted, no means have been found to express a highly reproducible antiviral property.

Accordingly, the development of an antiviral hard-coat film that is effective as a material of a decorative sheet having an antiviral property, and that is capable of expressing a highly reproducible antiviral property, and an antiviral adhesive-treated sheet and an antiviral decorative plate using the antiviral hard-coat film, has been desired.

### Citation List

### Patent Literature

PTL 1: JP2015-80887A

### Summary of Invention

### Technical Problem

An object of the present invention is to provide an antiviral hard-coat film that is effective as a material for decorative sheets having an antiviral property and can exhibit a high reproducible antiviral property. Another object of the present invention is to provide an antiviral adhesive-treated sheet and an antiviral decorative plate using the aforementioned antiviral hard-coat film.

The present inventors conducted extensive research, and as a result, they found that the above object can be achieved by a hard-coat film comprising silver-containing inorganic particles as an antiviral agent, and having a silver ion concentration measured by ICP-OES measurement in a specific range. Thus, the present invention was accomplished.

Specifically, the present invention relates to the following antiviral hard-coat film, and the antiviral adhesive-treated sheet and the antiviral decorative plate using the antiviral hard-coat film.
1. An antiviral hard-coat film comprising a crosslinked curable resin layer in an outermost layer,
   wherein
   (1) the crosslinked curable resin layer contains a cured product of a crosslinked curable resin and silver-containing inorganic particles; and
   (2) the hard-coat film has a silver ion concentration measured by ICP-OES measurement of 0.018 µg/cm² or more.
2. The antiviral hard-coat film according to Item 1, wherein the crosslinked curable resin contains a two-component curable urethane-based resin.
3. The antiviral hard-coat film according to Item 1, wherein the crosslinked curable resin contains an ionizing radiation-curable resin.
4. The antiviral hard-coat film according to any one of Items 1 to 3, wherein the silver-containing inorganic particles have an average particle size of 1 µm or more and 12 µm or less.
5. The antiviral hard-coat film according to any one of Items 1 to 4, wherein the silver-containing inorganic particles are silver-supported glass particles.
6. The antiviral hard-coat film according to Item 5, wherein the silver-supported glass particles contain phosphoric acid as a glass component.
7. The antiviral hard-coat film according to any one of Items 1 to 4, wherein the silver-containing inorganic particles are silver-supported molybdenum oxide particles.
8. The antiviral hard-coat film according to any one of Items 1 to 7, wherein the silver-containing inorganic particles are present in an amount of 1 part by mass or more and 10 parts by mass or less per 100 parts by mass of the crosslinked curable resin.
9. The antiviral hard-coat film according to any one of Items 1 to 8, wherein the silver ion concentration of the hard-coat film measured by the ICP-OES measurement is 0.50 µg/cm² or less.
10. The antiviral hard-coat film according to any one of Items 1 to 9,
   wherein
   the hard-coat film comprises a laminate comprising at least a base material sheet and/or a transparent thermoplastic resin layer and a crosslinked curable resin layer in sequence in the thickness direction, and
   the base material sheet and/or the transparent thermoplastic resin layer contain a thermoplastic resin as a resin component.
11. The antiviral hard-coat film according to Item 10, wherein the thermoplastic resin is at least one member selected from the group consisting of polyvinyl chloride and polyolefins.
12. The antiviral hard-coat film according to any one of Items 1 to 11, wherein the crosslinked curable resin layer has a thickness of 1 µm or more and 50 µm or less.
13. The antiviral hard-coat film according to any one of Items 1 to 12, wherein the crosslinked curable resin layer further comprises at least one member selected from the group consisting of an antiviral agent and an anti-allergen agent.
14. The antiviral hard-coat film according to any one of Items 1 to 13, wherein the crosslinked curable resin layer further contains inorganic antiviral particles and/or organic antiviral particles, which are different from the silver-containing inorganic particles.
15. The antiviral hard-coat film according to any one of Items 1 to 14, wherein the silver-containing inorganic particles have one or more particle size peaks.
16. The antiviral hard-coat film according to Item 14 or 15, wherein mixed particles of the silver-containing inorganic particles and the inorganic antiviral particles and/or organic antiviral particles have one or more particle size peaks.
17. The antiviral hard-coat film according to any one of Items 10 to 16, further comprising a picture pattern layer.
18. The antiviral hard-coat film according to any one of Items 1 to 17, having an embossed uneven pattern from the outermost surface side.
19. The antiviral hard-coat film according to any one of Items 3 to 18, wherein the ionizing radiation-curable resin is a resin mixture comprising an urethane(meth)acrylate oligomer (A) in an amount of 65 wt% or more and 95 wt% or less, and an aliphatic urethane(meth)acrylate oligomer (B) in an amount of 5 wt% or more and 35 wt% or less,
   the urethane(meth)acrylate oligomer (A) having 2 radically polymerizable unsaturated groups per molecule and having a weight average molecular weight of 1000 to 3000, and
   the aliphatic urethane(meth)acrylate oligomer (B) having 3 to 15 radically polymerizable unsaturated groups per molecule.
20. The antiviral hard-coat film according to any one of Items 3 to 18, wherein the ionizing radiation-curable resin contains two kinds of aliphatic urethane(meth)acrylates of resin A and resin B, wherein the resin A is an aliphatic urethane(meth)acrylate with an isocyanurate skeleton, and the resin B is an aliphatic urethane(meth)acrylate with an alicyclic skeleton without an isocyanurate skeleton.
21. The antiviral hard-coat film according to Item 20, wherein the alicyclic skeleton is at least one of isophorone and cyclohexane.
22. The antiviral hard-coat film according to any one of Items 1 to 21, comprising a back-side primer layer.
23. An antiviral adhesive-treated sheet comprising a laminate, the laminate comprising at least an adhesive sheet and the antiviral hard-coat film according to any one of Items 1 to 22 in sequence in the thickness direction.
24. An antiviral decorative plate comprising a laminate, the laminate comprising a decorative plate base, and the antiviral hard-coat film according to any one of Items 1 to 22 or the antiviral adhesive-treated sheet according to Item 23 in sequence in the thickness direction.

### Effects of Invention

The antiviral hard-coat film of the present invention comprises a crosslinked curable resin layer in the outermost layer, wherein
(1) the crosslinked curable resin layer contains a cured product of a crosslinked curable resin and silver-containing inorganic particles; and
(2) the hard-coat film has a silver ion concentration, which is measured by ICP-OES measurement, of 0.018 µg/cm² or more.

By having such a feature, the antiviral hard-coat film of the present invention, and the antiviral adhesive-treated sheet and the antiviral decorative plate using the antiviral hard-coat film, can exhibit a highly reproducible antiviral property.

### Brief Description of Drawings

Figs. 1(i) and (ii) are schematic cross-sectional views each showing an example of the antiviral hard-coat film of the present invention.
Figs. 2(iii) and (iv) are schematic cross-sectional views each showing an example of the antiviral hard-coat film of the present invention.
Fig. 3 is a schematic cross-sectional view showing an example of the antiviral hard-coat film of the present invention.
Fig. 4 is a schematic cross-sectional view showing an example of the antiviral adhesive-treated sheet of the present invention.
Fig. 5 is a cross-sectional view schematically showing an example of the components of the antiviral decorative plate of the present invention.

### Description of Embodiments

### 1. Antiviral hard-coat film

The antiviral hard-coat film of the present invention (hereinbelow referred to as the "hard-coat film of the present invention") is a hard-coat film comprising a crosslinked curable resin layer in an outermost layer, wherein
(1) the crosslinked curable resin layer contains a cured product of a crosslinked curable resin and silver-containing inorganic particles; and
(2) the hard-coat film has a silver ion concentration, which is measured by ICP-OES measurement, of 0.018 µg/cm² or more.

By having such a feature, the antiviral hard-coat film of the present invention, and the antiviral adhesive-treated sheet and the antiviral decorative plate using the antiviral hard-coat film can exhibit a highly reproducible antiviral property.

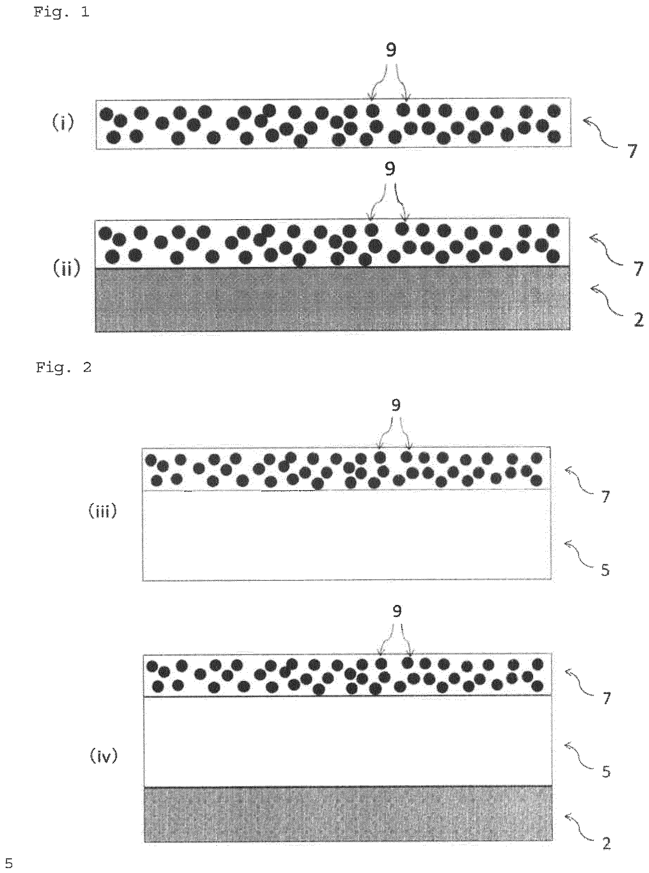

The specific structure (layer structure) of the hard-coat film of the present invention is not limited as long as it comprises a crosslinked curable resin layer in the outermost layer, and satisfies the predetermined requirements shown in Items (1) and (2) above. When the crosslinked curable resin layer of the outermost layer contains silver-containing inorganic particles as the antiviral agent in addition to the crosslinked curable resin, and satisfies the requirement of the silver ion concentration shown in Item (2) above, the hard-coat film of the present invention exhibits a highly reproducible antiviral property. Specifically, the description "comprises a crosslinked curable resin layer in the outermost layer" comprises an embodiment such that the hard-coat film comprises a crosslinked curable resin layer (single layer) alone (the embodiment shown in Fig. 1(i)).

In a specific embodiment, the hard-coat film of the present invention comprises a crosslinked curable resin layer (single layer) alone, as described above, or comprises a laminate comprising at least a base material sheet and/or a transparent thermoplastic resin layer, and a crosslinked curable resin layer in sequence in the thickness direction. If the hard-coat film comprises the laminate, the crosslinked curable resin layer at the outermost layer serves as a so-called surface-protecting layer.

Figs. 1 to 3 show a cross-sectional schematic diagram of an example of a hard-coat film according to the present invention. Fig. 1(i) shows an embodiment formed of a crosslinked curable resin layer 7 alone (one layer), and Fig. 1(ii) shows an embodiment formed of a laminate comprising a base material sheet 2 and a crosslinked curable resin layer 7. Fig. 2(iii) shows an embodiment formed of a laminate comprising a transparent resin layer 5 and a crosslinked curable resin layer 7, and Fig. 2(iv) shows an embodiment formed of a laminate comprising a base material sheet 2, a transparent resin layer 5, and a crosslinked curable resin layer 7. Although not shown in the figure, an embodiment in which a picture pattern layer 3 and/or a primer layer 6 is/are further provided between the base material sheet 2 and the crosslinked curable resin layer 7 in Fig. 1(ii), an embodiment in which a picture pattern layer 3 and/or a primer layer 6 is/are further provided between the transparent resin layer 5 and the crosslinked curable resin layer 7 in Figs. 2(iii) and (iv), or an embodiment in which a picture pattern layer 3 and/or a transparent adhesive layer 4 is/are further provided between the base material sheet 2 and the transparent resin layer 5 are included. Furthermore, an embossed uneven pattern may be formed.

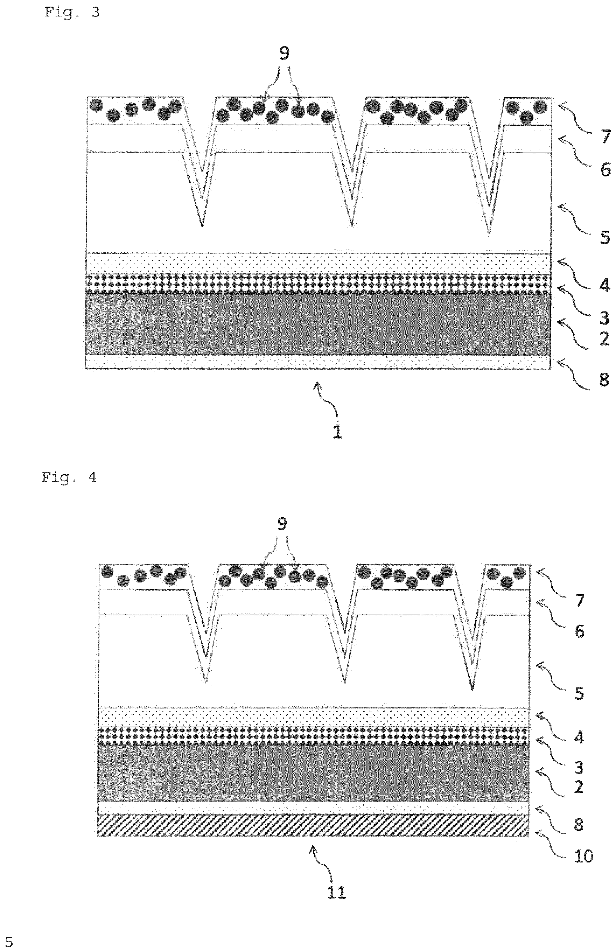

Fig. 3 shows a cross-sectional schematic diagram of another example of a hard-coat film according to the present invention. In Fig. 3, the picture pattern layer 3, the transparent adhesive layer 4, the transparent resin layer 5, the primer layer 6, and the crosslinked curable resin layer 7 are stacked in sequence on the base material sheet 2. The back-side primer layer 8 is further provided on the back surface of the base material sheet 2. Furthermore, an embossed uneven pattern is formed.

Furthermore, the present invention also includes the invention (e.g., an embodiment shown in Fig. 4) of an antiviral adhesive-treated sheet (hereinafter also referred to as "the adhesive-treated sheet of the present invention") comprising a laminate, the laminate comprising at least an adhesive sheet and the hard-coat film of the present invention in sequence in the thickness direction. Fig. 4 shows the structure of the adhesive-treated sheet 11 comprising the adhesive sheet 10 on the back surface of the hard-coat film 1 shown in Fig. 3. However, an adhesive-treated sheet 11 comprising the adhesive sheet 10 on the back surface of the hard-coat film 1 shown in Fig. 1 or 2 may be included.

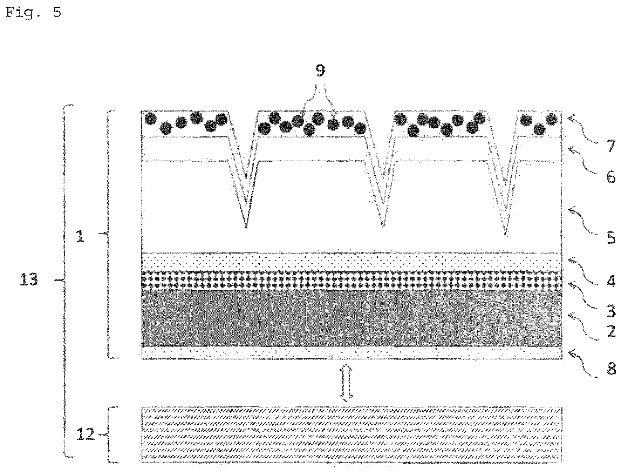

Furthermore, the present invention also includes an invention (e.g., an embodiment shown in Fig. 5) of an antiviral decorative plate (hereinafter also referred to as "the decorative plate of the present invention") comprising a laminate, the laminate comprising the decorative plate base and the hard-coat film or the adhesive-treated sheet of the present invention in sequence in the thickness direction. Fig. 5 shows the structure of a decorative plate 13 comprising a decorative plate base 12 on the back surface of the hard-coat film 1 shown in Fig. 3. The decorative plate 13 comprising a decorative plate base 12 on the back surface of the hard-coat film 1 shown in Fig. 1 or 2 may be included. Further, the decorative plate 13 comprising the decorative plate base 12 on the back surface of the adhesive-treated sheet 11 shown in Fig. 4 may be included, and the decorative plate 13 comprising the decorative plate base 12 on the back surface of the adhesive-treated sheet 11 comprising the adhesive sheet 10 on the back surface of the hard-coat film 1 shown in Fig. 1 or 2 may be included.

In the present specification, the surface visually observed after the hard-coat film of the present invention is formed, specifically, in the case where the present invention is a laminate comprising a base material sheet, the direction in which the crosslinked curable resin layer (surface-protecting layer) is laminated, as viewed from the base material sheet, is referred to as "above" or "front surface" and the direction in which the back-side primer layer is laminated, as viewed from the base material sheet, is referred to as "below" or "back surface." Such a relationship is the same as the cases of the adhesive-treated sheet and the decorative plate according to the present invention. In the laminate, "the side of the crosslinked curable resin layer (surface-protecting layer)" is abbreviated as "crosslinked curable resin layer (surface-protecting layer) side."

Hereinbelow, each layer of the hard-coat film of the present invention is described below using Fig. 3 as an example. However, the layer structure of the hard-coat film according to the present invention is not limited to the embodiment of Fig. 3, and various layer structures of a single layer or a laminate as described above can be used. In the following description, the lower and upper limits of the numerical range represented by "to" mean "or more and or less" (e.g., α to β means α or more and β or less).

### Base Material Sheet

The picture pattern layer etc. are sequentially laminated on the surface (front surface) of the base material sheet. The outermost layer is a crosslinked curable resin layer (surface-protecting layer).

Examples of base material sheets include various materials, such as resin films, paper, and resin impregnated paper. Of the resin films, those containing a thermoplastic resin as a resin component are preferable. Examples include polyvinyl chloride, polyethylene terephthalate, polybutylene terephthalate, polyamide, polyethylene, polypropylene, polycarbonate, polyethylene naphthalate, ethylene-vinyl acetate copolymer, ethylene-acrylic acid copolymer, ethylene-acrylate copolymer, ionomer, acrylic acid ester, and methacrylic acid ester. In the present invention, at least one of polyvinyl chloride and polyolefin (e.g., polyethylene and polypropylene) can be preferably used.

The base material sheet may be colored. For example, colorants (pigments or dyes) may be added to such thermoplastic resins. Examples of usable colorants include inorganic pigments such as titanium dioxide, carbon black, and iron oxide; organic pigments such as phthalocyanine blue; and various dyes. One or two or more dyes may be selected. The amount of colorants may be selected according to the desired color etc.

The base material sheet may contain, as needed, various kinds of additives, such as fillers, matting agents, foaming agents, flame retardants, lubricants, antistatic agents, antioxidants, ultraviolet absorbers, and light stabilizers.

The thickness of the base material sheet is suitably determined depending on the application of the final product, the method of use of the final product, etc. In general, the thickness of the base material is preferably 50 to 250 µm.

The surface (front surface) of the base material sheet may be subjected to a corona discharge treatment in order to enhance the adhesion of the ink that forms a picture pattern layer. The method and condition of corona discharge treatment may be performed according to known methods. The back surface of the base material sheet may be subjected to a corona discharge treatment, a picture pattern layer (so-called back print) may be formed, a back-side primer layer described later, or a backer layer described later, may be formed, as needed.

### Picture Pattern Layer

The picture pattern layer is an optional layer that imparts a desired picture (design) to the hard-coat film of the present invention, and the kind etc. of the picture are not limited. Examples include wood-grain patterns, leather patterns, marble grain patterns, pebbly patterns, tiled patterns, brick-masonry patterns, textile patterns, geometric figures, letters, symbols, abstraction patterns, grass and flower patterns, landscapes, characters, and the like.

The method of forming a picture pattern layer is not particularly limited. For example, the picture pattern layer may be formed on the surface of a base material sheet by a known printing method using ink obtained by dissolving (or dispersing) a known colorant (dye or pigment) together with a binding resin in a solvent (or a dispersion medium). As the ink, an aqueous composition can also be used from the viewpoint of reducing the VOC of the hard-coat film. When the laminate comprises a transparent resin layer without using the base material sheet, an embodiment comprising a picture pattern layer between the transparent resin layer and the crosslinked curable resin layer can be used.

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminum powder and bronze powder; pearlescent pigments, such as titanium oxide-coated mica and bismuth chloride oxide; fluorescent pigments; noctilucent pigments; and the like. Such colorants may be used singly or in a combination of two or more. These colorants may be used in combination with a filler such as silica, an extender pigment such as organic beads, a neutralizer, a surfactant, and the like.

Examples of binding resins include hydrophilized polyester-based urethane resins, and the like, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, and the like. Specific examples of usable binding resins include polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenolic resins, and other water-soluble synthetic resins; water-soluble natural polymers such as polynucleotides, polypeptides, and polysaccharides; and the like. Other examples include natural rubber, synthetic rubber, polyvinyl acetate-based resins, (meth)acrylic based-resins, polyvinyl chloride-based resins, modified polyurethane-polyacrylic-based resins, mixtures of natural rubber etc. mentioned above, and other resins. Such binding resins may be used singly or in a combination of two or more.

Examples of solvents (or dispersion media) include petroleum-based organic solvents, such as hexane, heptane, octane, toluene, xylene, ethylbenzene, cyclohexane, and methylcyclohexane; ester-based organic solvents, such as ethyl acetate, butyl acetate, 2-methoxyethyl acetate, and 2-ethoxyethyl acetate; alcohol-based organic solvents, such as methyl alcohol, ethyl alcohol, normal propyl alcohol, isopropyl alcohol, isobutyl alcohol, ethylene glycol, and propylene glycol; ketone-based organic solvents, such as acetone, methyl ethyl ketone, methyl isobutyl ketone, and cyclohexanone; ether-based organic solvents, such as diethyl ether, dioxane, and tetrahydrofuran; chlorine-based organic solvents, such as dichloromethane, carbon tetrachloride, trichloroethylene, and tetrachloroethylene; inorganic solvents, such as water; and the like. These solvents (or dispersion media) may be used singly or in a combination of two or more.

Examples of printing methods for forming the picture pattern layer include gravure printing, offset printing, screen printing, flexo printing, electrostatic printing, ink jet printing, and the like. When a solid-like picture pattern layer is formed over the entire surface, various coating methods, such as roll coating, knife coating, air knife coating, die coating, lip coating, comma coating, kiss coating, flow coating, and dip coating, can be used. In addition to the above, examples of usable methods include hand-drawing methods, marbling methods, photographic methods, transfer methods, laser beam drawing methods, electron beam drawing methods, metal partial deposition methods, etching methods, and the like. Such methods may be used in combination with other methods.

The thickness of the picture pattern layer is not particularly limited, and can be appropriately set according to the characteristics of the product. The layer thickness is about 0.1 to 15 µm.

### Transparent Resin Layer

The transparent resin layer is a layer that can be optionally provided, and is not limited as long as it is transparent. This layer may be colorless transparent, colored transparent, translucent, or the like. Although the material of the transparent resin layer is not limited, the transparent resin layer is preferably formed of thermoplastic resin. Specific examples include polyvinyl chloride, polyethylene terephthalate, polybutylene terephthalate, polyamide, polyethylene, polypropylene, polycarbonate, polyethylene naphthalate, ethylene-vinyl acetate copolymer, ethylene-acrylic acid copolymer, ethylene-acrylate copolymer, ionomer, acrylic acid ester, and methacrylic acid ester. In the present invention, at least one of polyvinyl chloride and polyolefins (e.g., polyethylene and polypropylene) can be preferably used. In the present specification, when the transparent resin layer contains a thermoplastic resin, this transparent resin layer is particularly referred to as a "transparent thermoplastic resin layer."

The transparent resin layer may be colored as long as it has transparency.

Further, the transparent resin layer may contain, as needed, various kinds of additives, such as flame retardants, lubricants, antistatic agents, antioxidants, ultraviolet absorbers, and light stabilizers, as long as it has transparency.

The thickness of the transparent resin layer is not limited, but is preferably 40 µm or more and 300 µm or less, more preferably 60 µm or more and 200 µm or less, and most preferably 60 µm or more and 100 µm or less. When the thickness of the transparent resin layer is set within the above range, deep embossing can be formed, and it is easy to obtain an effect of suppressing the occurrence of scratches and scraping (*egara torare* in Japanese) due to the wear of the picture pattern layer.

### Transparent Adhesive Layer

In order to increase the adhesion between the picture pattern layer and the transparent resin layer or a crosslinked curable resin layer (surface-protecting layer) described later, a transparent adhesive layer may be formed. The transparent adhesive layer is not particularly limited as long as it is transparent. This layer may be colorless transparent, colored transparent, translucent, or the like.

The adhesive is not particularly limited, and adhesives known in the field of decorative sheets can be used. Examples of adhesives known in the field of decorative sheets include thermoplastic resins, such as polyamide resin, acrylic resin, and vinyl acetate resin; thermosetting resins, such as urethane-based resin; and the like. These adhesives may be used singly or in a combination of two or more. Further, two-component curable polyurethane resins or polyester resins using isocyanate as a curing agent can also be applied.

The thickness of the transparent adhesive layer is not particularly limited, but is about 0.1 to 30 µm, and preferably about 1 to 20 µm.

### Primer Layer

A primer layer for a crosslinked curable resin layer (surface-protecting layer) may be provided on the transparent resin layer. The primer layer can increase the adhesion between the transparent resin layer and a crosslinked curable resin layer, described later, and can also increase the bending workability and scratch resistance of the hard-coat film when combined with the crosslinked curable resin layer. The primer layer is not particularly limited as long as it is transparent. This layer may be colorless transparent, colored transparent, translucent, or the like.

The primer layer can be formed by applying a known primer agent to the surface of the transparent resin layer. Examples of primer agents include urethane resin-based primer agents comprising an acrylic-modified urethane resin (acrylic urethane-based copolymer resin), a polycarbonate-based acrylic urethane copolymer resin, etc.; primer agents comprising a urethane-cellulose-based resin (e.g., a resin obtained by adding hexamethylene diisocyanate to a mixture of urethane and nitrocellulose); resin-based primer agents comprising a block copolymer of acryl and urethane; and the like. Among these, urethane resin-based primer agents comprising a polycarbonate-based acrylic urethane copolymer resin can be preferably used, from the viewpoint of scratch resistance and weather resistance.

The primer agent may contain additives, as needed. Examples of additives include weather-resistant agents, such as ultraviolet absorbers and light stabilizers; fillers, such as silica, calcium carbonate, and clay; flame retardants, such as magnesium hydroxide; antioxidants; lubricants; foaming agents; and the like. The amount of additives to be mixed can be appropriately set according to the characteristics of the product.

Among the above additives, examples of ultraviolet absorbers include benzophenone-based ultraviolet absorbers, benzotriazole-based ultraviolet absorbers, triazine-based ultraviolet absorbers, and the like. Preferable light stabilizers are, for example, hindered amine-based light stabilizers (HALS). The contents of these weather-resistant agents are not limited, and the amount of each of the ultraviolet absorber and light stabilizer may be about 1000 to 100000 mass ppm. In the present invention, it is particularly preferable to use a triazine-based ultraviolet absorber and/or a hindered amine-based light stabilizer.

The thickness of the primer layer is not limited, but is preferably 0.5 µm or more and 12 µm or less, and more preferably 1 µm or more and 8 µm or less. When the thickness of the primer layer is set within the above range, the bending workability and scratch resistance of the hard-coat film can be more likely increased due to the combination with a crosslinked curable resin layer. Further, additives such as weather-resistant agents can be easily contained, and weather resistance can be easily imparted to the hard-coat film.

### Crosslinked Curable Resin Layer (Surface-Protecting Layer)

The hard-coat film of the present invention comprises a crosslinked curable resin layer in the outermost layer. As described above, the hard-coat film of the present invention may be formed of a crosslinked curable resin layer alone (one layer). In the case of a laminate, the crosslinked curable resin layer serves as a surface-protecting layer.

The crosslinked curable resin layer is the outermost layer of the hard-coat film, and comprises silver-containing inorganic particles as an antiviral agent, in addition to the cured product of the crosslinked curable resin. When the hard-coat film is a laminate, the crosslinked curable resin is not particularly limited as long as it is transparent. The crosslinked curable resin may be colorless transparent, colored transparent, translucent, or the like.

Although the resin component of the crosslinked curable resin is not limited, it is preferable to contain an ionizing radiation-curable resin or a two-component curable urethane-based resin. It is preferable that the crosslinked curable resin be substantially formed of these resins. When the outermost layer is formed of one or more ionizing radiation-curable resins or one or more two-component curable urethane-based resins, the abrasion resistance, impact resistance, stain resistance, scratch resistance, weather resistance, and the like of the hard-coat film can be easily enhanced. Of these, ionizing radiation-curable resins are more preferred.

Ionizing radiation-curable resins are not particularly limited. Usable examples thereof include transparent resins comprising, as a main component, one or more prepolymers (including oligomers) and/or one or more monomers that contain, in the molecule, a radically polymerizable double bond that can undergo the crosslinking polymerization reaction by irradiation of ultraviolet rays, electron beams, or like ionizing radiation. These prepolymers or monomers can be used singly or in a combination of two or more. The curing reaction is usually a crosslinking curing reaction.

Specific examples of the prepolymers or monomers include compounds that contain, in the molecule, a radically polymerizable unsaturated group, such as a (meth)acryloyl group or (meth)acryloyloxy group; a cation-polymerizable functional group, such as an epoxy group; etc. Furthermore, polyene/thiol-based prepolymers comprising polyene and polythiol in combination are also preferable. In this specification, a (meth)acryloyl group means an acryloyl group or a methacryloyl group.

Examples of prepolymers comprising a radically polymerizable unsaturated group include polyester (meth)acrylate, urethane (meth)acrylate, epoxy (meth)acrylate, melamine (meth)acrylate, triazine (meth)acrylate, silicone (meth)acrylate, and the like. It is preferable that such prepolymers usually have a weight average molecular weight of about 250 to 100000. The weight average molecular weight in the present specification is an average molecular weight as measured by GPC analysis (gel permeation chromatography) and converted using standard polystyrene.

Examples of monomers having a radically polymerizable unsaturated group include monofunctional monomers, such as methyl(meth)acrylate, 2-ethylhexyl(meth)acrylate, phenoxyethyl(meth)acrylate, and the like. Moreover, examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

Examples of prepolymers having a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate, and pentaerythritol tetrathioglycolate. Examples of polyenes include polyurethanes formed of diol and diisocyanate, wherein an allyl alcohol is added to each end thereof.

In the present invention, as an ionizing radiation-curable resin, a resin mixture comprising a urethane(meth)acrylate oligomer (A) in an amount of 65 wt% or more and 95 wt% or less, and an aliphatic urethane(meth)acrylate oligomer (B) in an amount of 5 wt% or more and 35 wt% or less, the urethane(meth)acrylate oligomer (A) having two radically polymerizable unsaturated groups per molecule and having a weight average molecular weight of 1000 to 3000, and the aliphatic urethane(meth)acrylate oligomer (B) having 3 to 15 radically polymerizable unsaturated groups per molecule. When such a resin mixture is used, the high crosslinking density makes it easy to obtain effects such as scratch resistance and stain resistance; and by suitably adjusting the weight average molecular weight and/or the amount of the resin mixture, it is easy to adjust the surface performance to suit its use, such as imparting excellent impact resistance to the crosslinked curable resin layer, providing an excellent property for processing such as V-cut, etc.

In the present invention, a resin mixture containing two kinds of aliphatic urethane(meth)acrylates of the following resin A and resin B can be used as the ionizing radiation-curable resin. (Meth)acrylate means acrylate or methacrylate.

Resin A is an aliphatic urethane(meth)acrylate with an isocyanurate skeleton, and is not limited as long as this requirement is satisfied. For example, an aliphatic urethane(meth)acrylate with an isocyanurate skeleton formed from a trimer of a diisocyanate is preferable. Specific examples include a trimer of hexamethylene diisocyanate (particularly 1,6-hexamethylene diisocyanate), a trimer of tolylene diisocyanate, a trimer of m-xylene diisocyanate, and the like. Since tolylene diisocyanate and m-xylene diisocyanate have a benzene ring, their weather resistance may be inferior to that of hexamethylene diisocyanate. Therefore, these diisocyanates are preferably hydrogenated. These resins A are effective to enhance the contamination resistance, alkali resistance, etc., of the crosslinked curable resin layer.

Resin B is an aliphatic urethane(meth)acrylate with an alicyclic skeleton without an isocyanurate skeleton, and is not limited as long as this requirement is satisfied. For example, the alicyclic skeleton is preferably at least one of isophorone and cyclohexane. Specific examples include those in which an acrylate is added to the end of a urethane oligomer, which is a polymer containing isophorone diisocyanate and butanediol as monomers, PG-modified diacrylate of hydrogenated dicyclohexylmethane diisocyanate (hydrogenated MDI), and the like. These resins B are effective to impart flexibility to the crosslinked curable resin layer, and when combined with resin A, impart, to the crosslinked curable resin layer, contamination resistance, alkali resistance, etc., that are excellent for a long period of time, and an effect of limiting the occurrence of breakage and cracks when an impact is applied or during processing.

The proportion of resin A and resin B in the ionizing radiation-curable resin is not limited; however, when the total amount of resin A and resin B is 100 mass%, resin A is preferably in the range of 10 to 50 mass% and resin B is preferably in the range of 50 to 90 mass%; and resin A is more preferably in the range of 20 to 40 mass% and resin B is more preferably in the range of 60 to 80 mass%.

The ionizing radiation-curable resin is a transparent resin comprising, as a main component, a prepolymer (including an oligomer) and/or a monomer containing, in the molecule, a radically polymerizable double bond that can undergo a crosslinking polymerization reaction by ionizing radiation, such as irradiation with ultraviolet rays or electron beams. The curing reaction is usually a crosslinking curing reaction. Electromagnetic waves or charged particles having energy high enough to cause the curing reaction of molecules of ionizing radiation-curable resin (composition) are used as the ionizing radiation to cure the ionizing radiation-curable resin. Ultraviolet rays or electron beams may usually be used. Visible light, X-rays, ionic rays, or the like may also be used. In the present invention, it is preferable to use, among the ionizing radiation-curable resins, electron beam-curable resins, from the viewpoints that the properties of the raw material resin can be directly reflected in the properties of resin components of the crosslinked curable resin layer because a photopolymerization initiator is not contained, and that the range of choices is widened when weather-resistant agents are used in combination.

The two-component curable urethane-based resins are not particularly limited. Usable examples thereof include those comprising a polyol component having a hydroxy group (e.g., acrylic polyol, polyester polyol, polyether polyol, epoxy polyol) as a main compound; and an isocyanate component (e.g., tolylene diisocyanate, hexamethylene diisocyanate, m-xylene diisocyanate), which functions as a curing agent component.

The crosslinked curable resins listed above can be used singly, or in a combination of two or more.

The crosslinked curable resin layer comprises silver-containing inorganic particles as an antiviral agent. As the silver-containing inorganic particles, a composite material formed by incorporating silver ions into a material, such as zeolite, apatite, zirconia, and molybdenum oxide, which is an inorganic particle, can be used. Silver-supported glass particles can also be used, and typical examples of glass components include phosphoric acid. Silver-supported glass particles contain silver as one of the glass components, and are positioned as a soluble glass. Since the solubility of the glass when in contact with water can be adjusted by adjusting the glass composition, it is considered that antiviral performance and moreover antibacterial performance can be easily exhibited even when the addition amount of the silver-supported glass particles is relatively low. It is considered that when the silver-supported glass particles are brought into contact with water, a glass is dissolved to elute silver ions, thus inactivating viruses and bacteria. In addition, since silver-supported molybdenum oxide particles can support a large amount of silver ions, it is possible to exhibit antiviral performance and antibacterial performance even when only a small amount of silver-supported molybdenum oxide particles are used, and the silver-supported molybdenum oxide particles have an advantage of easily affecting the surface performance of the crosslinked curable resin layer.

Commercially available products used for various applications on the market may be used as these silver-containing inorganic particles. The average particle size of the silver-containing inorganic particles is not limited, and is preferably 1 µm or more and 12 µm or less, and more preferably 3 µm or more and 10 µm or less. The lower limit of the average particle size may be set to "exceeding" 1 um. The average particle size in the present specification is a value that can be determined as the mass average value D50 in a particle size distribution measurement by the laser light diffraction method.

In the present invention, the silver-containing inorganic particles can be used singly, or in a combination of two or more. The kind of the silver-containing inorganic particles can vary depending on the combination of conditions, such as the type of the carrier, silver content, and average particle size. It is considered that since different types of the silver-containing inorganic particles may have different average particle sizes, the silver-containing inorganic particles may have one or more particle size peaks.

The content of the silver-containing inorganic particles in the crosslinked curable resin layer may be such that the silver ion concentration as measured by ICP-OES measurement for the hard-coat film of the present invention is 0.018 µg/cm² or more. The ICP-OES measurement in the present specification was performed as follows. The hard-coat film was cut into a size of 10 cm × 10 cm to obtain a test piece, and the test piece was placed in a polypropylene bag containing 50 ml of ultrapure water. After heating in a constant-temperature bath at 40°C for 1 hour, ultrapure water was removed, and the silver ion concentration was determined by ICP-OES measurement. The silver ion concentration measured by the ICP-OES measurement is preferably 0.018 µg/cm² or more and 0.50 µg/cm² or less. The content of the silver-containing inorganic particles per 100 parts by mass of the crosslinked curable resin is preferably 1 part by mass or more and 10 parts by mass or less, and more preferably 2 parts by mass or more and 8 parts by mass or less. The upper limit of the content may be set to "less than" 10 parts by mass.

The thickness of the crosslinked curable resin layer is not limited, but is preferably 1 µm or more and 50 um or less, and more preferably 2 um or more and 35 µm or less. The thickness of the crosslinked curable resin layer means the measurement value at the flat portion where the embossed uneven pattern is not formed.

The crosslinked curable resin layer can be formed, for example, by applying on a primer layer a composition for forming a crosslinked curable resin layer containing a crosslinked curable resin and silver-containing inorganic particles by a known coating method such as gravure coating or roll coating, and then curing the resin.

In the crosslinked curable resin layer, in addition to the silver-containing inorganic particles, inorganic antiviral particles and/or organic antiviral particles, which are different from the silver-containing inorganic particles, may be further incorporated to form mixed particles as long as the effect of the present invention is not impaired. Examples of the mixed particles include mixed particles of silver-containing inorganic particles, inorganic antiviral particles, and organic antiviral particles, mixed particles of silver-containing inorganic particles and inorganic antiviral particles, and mixed particles of silver-containing inorganic particles and organic antiviral particles. When different types of antiviral particles are contained in the mixed particles, the average particle size may be different, and thus, the mixed particles that require silver-containing inorganic particles in the crosslinked curable resin layer may have one or more particle size peaks. When silver-containing inorganic particles are used in combination with antiviral particles other than the silver-containing inorganic particles (other antiviral particles), the mass ratio of silver-containing inorganic particles : other antiviral particles is not limited, and can be set in the range of 20:1 to 5:30, or 20:1 to 30:20. When other antiviral particles are used in combination, effects such as the extension of the range of applicable viruses and the shortening of time required for viral inactivation are expected.

In addition, a colorant such as a dye and a pigment, a filler such as an inorganic filler, a weather-resistant agent, a antifoaming agent, a levelling agent, a thixotropic agent, a flame retardant, an antiviral agent different from the above antiviral agent (silver-containing inorganic particles and other viral particles), an anti-allergen agent different from the above antiviral agent (silver-containing inorganic particles and other viral particles), and like various additives may be added to the crosslinked curable resin layer to the extent that the predetermined antiviral properties are not affected. For example, the present invention can use an embodiment further comprising at least one member selected from the group consisting of antibacterial agents and anti-allergen agents in addition to the antiviral agent. In many cases, the inorganic filler is mainly used as a matting agent; however, when the crosslinked curable resin layer contains an inorganic filler, the effect of suppressing the curing shrinkage of the surface-protecting layer can also be expected.

Antibacterial agents include inorganic antibacterial agents and organic antibacterial agents. Inorganic antibacterial agents are particularly desirable because they are generally safer, more durable, and more heat-resistant than organic antibacterial agents. Inorganic antibacterial agents in the present specification are agents in which antibacterial metals, such as copper except for silver, and zinc, are supported on various inorganic carriers.

The above anti-allergen agent contains either an inorganic compound or an organic compound; each of them may be used singly, or a mixture of two or more different types may be used. The inorganic compound is preferably a metal-supported material.

The inorganic material of the inorganic compound is preferably, for example, at least one member selected from the group consisting of titanium oxide, calcium phosphate, calcium silicate, zirconium phosphate, zeolite, silica alumina, magnesium silicate, and magnesium phosphate, among which preferred are titanium oxide, zirconium phosphate, etc.

The metal supported on the inorganic material in the present specification is preferably, for example, at least one member selected from the group consisting of gold except for silver, platinum, zinc, and copper, among which preferred are zinc, etc. Preferred examples of commercial products include Atomy Ball TZ-R (zinc-supported titanium oxide) produced by JGC Catalysts and Chemicals Ltd., and the like. These anti-allergen agents effectively act against various allergens, such as mites and pollens.

The organic compound is preferably a phenolic hydroxyl group-containing water-insoluble polymer, a polyphenol compound supported on inorganic solid acid, or a polymer containing at least one monomer component selected from the group consisting of styrene sulfonic acid and salts thereof.

As the phenolic hydroxyl group-containing water-insoluble polymer, examples of commercial products include Aller Buster (trade name) produced by Sekisui Chemical Co., Ltd., Marcalinker M (trade name) produced by Maruzen Petrochemical Co., Ltd., and the like. Further, examples of the combination of a polyphenol compound and a zirconium compound include AlleRemove (trade name) produced by Toagosei Co., Ltd., and the like. These anti-allergen agents effectively act against various allergens, such as mites and pollens.

As at least one monomer component selected from the group consisting of styrene sulfonic acid and salts thereof, the materials described in JP6136433B can be used. Preferred examples include styrene sulfonate homopolymers, styrene sulfonate-styrene sulfonic acid copolymers, styrene sulfonate-styrene copolymers, styrene sulfonic acid-styrene copolymers, styrene sulfonate-styrene sulfonic acid-styrene terpolymers, and the like.

In addition, when an organic compound and an inorganic compound are mixed, for example, an anionic phenolic material and an anti-allergic zinc-based material can be used.

Examples of the anionic phenolic material include tannin, tannic acid-tartar emetic, phenol sulfonic acid formaldehyde resin, sulfone compounds of novolac resin, methanesulfonic acid of novolac resin, methanesulfonic acid of resol resin, benzylated phenol sulfonic acid, thiophenolic compounds, dihydroxydiphenyl sulfone compounds, ligand compounds, and metal chelate compounds thereof, which can be suitably selected for use.

The zinc-based material is suitably selected from water-soluble zinc compounds or water-insoluble zinc compounds, zinc/metal oxide composite materials, and the like. Preferably, water-insoluble zinc compound and/or water-insoluble zinc/metal oxide composite particles are dispersed in water, the particle size is 50 µm or less, and the metal oxide contains at least one of titania, silica, and alumina.

### Embossing

The embossing is conducted to impart a desired texture, such as wood-grain patterns, to the hard-coat film. The embossing may be applied onto the transparent resin layer and/or the crosslinked curable resin layer. For example, after the crosslinked curable resin layer is softened by heating, the softened crosslinked curable resin layer is pressed and shaped by using an embossing plate having a desired projection and depression pattern, and the crosslinked curable resin layer is then solidified by cooling to provide a texture. The embossing may be conducted using a known sheet-fed embossing machine or rotary embossing machine.

Examples of the projection and depression patterns applied by embossing include wood-grain vessel patterns, bosses (projection and depression patterns of annual rings that stand out), hairline patterns, grain patterns, matte patterns, and the like.

When embossing is applied, ink may be filled into the embossed depression portions by wiping as needed. For example, ink may be filled into the embossed depression portions while plowing the surface thereof with a doctor blade. Ink containing a two-component curable urethane resin as a binder can usually be used as the ink to be filled (wiping ink). In particular, when a wood-grain vessel-like projection and depression pattern is subjected to wiping, a design more close to actual wood grain can be attained, thus increasing the value of the product.

### Back-Side Primer Layer

A back-side primer layer may be provided, as needed, on the back surface of the base material sheet. This is effective, for example, when a decorative plate is produced by bonding a base material sheet and a decorative plate base.

The back-side primer layer can be formed by applying a known primer agent to the base material sheet. Examples of primer agents include urethane resin-based primer agents comprising an acrylic-modified urethane resin (acrylic urethane-based copolymer resin), a polycarbonate-based acrylic urethane copolymer resin, etc.; primer agents comprising a urethane-cellulose-based resin (e.g., a resin obtained by adding hexamethylene diisocyanate to a mixture of urethane and nitrocellulose); resin-based primer agents comprising a block copolymer of acryl and urethane; and the like.

The primer agent may contain additives, as needed. Examples of additives include fillers such as calcium carbonate and clay, flame retardants such as magnesium hydroxide, antioxidants, lubricants, foaming agents, ultraviolet absorbers, light stabilizers, and the like. The amount of additives to be mixed can be appropriately set according to the characteristics of the product.

The thickness of the back-side primer layer is not limited, but is usually 0.01 to 10 µm, and preferably about 0.1 to 1 µm.

### Synthetic-Resin Backer Layer

A synthetic-resin backer layer may be provided, as needed, on the back surface of the base material sheet. Providing a synthetic-resin backer layer further increases the impact resistance of the hard-coat film. When a back-side primer layer mentioned above is also provided, the synthetic-resin backer layer and the back-side primer layer are provided in this order from the base material sheet side on the back surface of the base material sheet.

Examples of the resin that constitutes a synthetic-resin backer layer include polypropylene, ethylene-vinyl alcohol copolymers, polymethylene, polymethyl pentene, polyethylene terephthalate, highly heat-resistant polyalkylene terephthalate (e.g., polyethylene terephthalate prepared by replacing a portion of ethylene glycol with 1,4-cyclohexane dimethanol, diethylene glycol, etc.; PET-G, trade name, Eastman Chemical Company), polybutylene terephthalate, polyethylene naphthalate, polyethylene naphthalate-isophthalate copolymers, polycarbonate, polyarylate, polyimide, polystyrene, polyamide, ABS, styrene butadiene rubber, isoprene rubber, chloroprene rubber, and like diene rubbers; butyl rubber, ethylene propylene rubber, and like non-diene rubbers; natural rubber, thermoplastic elastomers, and the like. These resins may be used singly or in a combination of two or more.

The thickness of the synthetic-resin backer layer is preferably 0.1 to 0.6 mm, more preferably 0.15 to 0.45 mm, and still more preferably 0.20 to 0.40 mm. A lower limit of the thickness of the synthetic-resin backer layer within these ranges further increases the impact resistance of the hard-coat film. An upper limit of the thickness of the synthetic-resin backer layer within these ranges further suppresses the warpage of the hard-coat film.

### Formation of Various Additives Contained in Layers of Hard-Coat Film into Vesicles

The various additives to be added to the layers of the hard-coat film of the present invention described above (e.g., inorganic fillers to be added to the primer layer and the surface-protecting layer) are preferably formed into vesicles. Examples of the method for forming various additives into vesicles are not particularly limited, and known methods may be used to form the vesicles. Among various methods, the supercritical reverse phase evaporation method is preferable.

Examples of the vesicle formation method include the Bangham method, an extrusion method, a hydration method, a reverse phase evaporation method, and a freeze-thaw method, in addition to the supercritical reverse phase evaporation method. These vesicle formation methods are briefly described below. In the Bangham method, chloroform or a chloroform/methanol mixed solvent is placed in a container such as a flask, and a phospholipid is further added and dissolved therein; then, the solvent is removed with an evaporator to form a thin film of the phospholipid; and after a dispersion of additives is added, the mixture is hydrated and dispersed with a vortex mixer to thereby obtain vesicles. In the extrusion method, a phospholipid solution for a thin film is prepared, and the solution is passed through a filter in place of the mixer used as an external agitator in the Bangham method, thereby obtaining vesicles. In the hydration method, which is almost the same preparation method as the Bangham method, the mixture is gently stirred for dispersion, without using a mixer, to obtain vesicles. In the reverse phase evaporation method, a phospholipid is dissolved in diethyl ether or chloroform, a solution containing additives is added thereto to form a W/O emulsion, the organic solvent is removed from the emulsion under reduced pressure, and then water is added to thereby obtain vesicles. In the freeze-thaw method, cooling and heating is used as an external agitation, and cooling and heating is repeated to obtain vesicles.

The supercritical reverse phase evaporation method is specifically explained below. The supercritical reverse phase evaporation method refers to a method of adding an aqueous phase containing various additives as water-soluble or hydrophilic encapsulation materials to a mixture in which a material for forming the outer membrane of the vesicle is evenly dissolved in carbon dioxide in a supercritical state or carbon dioxide at a temperature or pressure condition equal to or greater than the supercritical point, thereby forming a capsule-like vesicle in which the various additives as encapsulation materials are encapsulated with a single membrane. "Carbon dioxide in a supercritical state" refers to carbon dioxide in a supercritical state at a temperature equal to or greater than the critical temperature (30.98°C), and a pressure equal to or greater than the critical pressure (7.3773±0.0030 MPa); and "carbon dioxide at a temperature or pressure condition equal to or greater than the critical point" refers to carbon dioxide under a condition in which only the critical temperature or only the critical pressure exceeds the critical condition. This method can produce a single-walled lamellar vesicle having a diameter of 50 to 800 nm. "Vesicle" is the general name of a folliculus having a spherically closed membrane structure containing a liquid phase. In particular, those having an outer membrane formed of a biological lipid, such as a phospholipid, are called "liposomes."

Examples of phospholipids include phosphatidylcholine, phosphatidylethanolamine, phosphatidylserine, phosphatidic acid, phosphatidylglycerol, phosphatidylinositol, cardiolipin, egg yolk lecithin, hydrogenated egg yolk lecithin, soybean lecithin, hydrogenated soybean lecithin, and like glycerophospholipids; and sphingomyelin, ceramide phosphorylethanolamine, ceramide phosphorylglycerol, and like sphingophospholipids.

Other examples of the materials constituting the outer layer include nonionic surfactants; and dispersants, such as a mixture of these surfactants and cholesterols or triacylglycerols.

Examples of nonionic surfactants include one or more members selected from polyglycerolether, dialkylglycerol, polyoxyethylene hardened castor oil, polyoxyethylene alkylether, polyoxyethylene sorbitan fatty acid ester, sorbitan fatty acid ester, polyoxyethylene polyoxypropylene copolymers, polybutadiene-polyoxyethylene copolymers, polybutadiene-poly2-vinylpyridine, polystyrene-polyacrylic acid copolymers, polyethylene oxide-polyethyl ethylene copolymers, polyoxyethylene-polycaprolactam copolymers, and the like.

Examples of the cholesterols include one or more members selected from cholesterol, α-cholestanol, β-cholestanol, cholestane, desmosterol (5,24-cholestadiene-3β-ol), sodium cholate, cholecalciferol, and the like.

The outer membrane of the liposome may be formed from a mixture of a phospholipid and a dispersant. By forming an outer layer as a liposome formed of a phospholipid, the hard-coat film of the present invention ensures desirable compatibility between the resin composition, which is the main component of each layer, and various additives.

### 2. Antiviral Adhesive-Treated Sheet

The antiviral adhesive-treated sheet of the present invention comprises, in sequence, in the thickness direction, a laminate comprising at least an adhesive sheet and the hard-coat film of the present invention. The adhesive sheet is not particularly limited, and the adhesive sheet used in the field of decorative sheets and other functional sheets can be suitably used. Since the adhesive-treated sheet of the present invention comprises an adhesive sheet on the back surface, it can be attached to the surface of various articles and adherends, and can optionally provide antiviral properties.

### 3. Antiviral Decorative Plate

The antiviral decorative plate of the present invention comprises a laminate comprising, in sequence in the thickness direction, a decorative plate base, and the hard-coat film of the present invention or the adhesive-treated sheet of the present invention.

Fig. 5 shows an example of an antiviral decorative plate 13 in which the hard-coat film 1 of the present invention is laminated on a decorative plate base 12 in this order (the surface opposite the crosslinked curable resin layer side is bonded together with the decorative plate base 12).

The decorative plate base is, although not limited to, for example, at least one member selected from medium-density wood fiberboards, high-density wood fiberboards, particleboards, coniferous tree plywood, broadleaf tree plywood, fast-growing plywood, cork sheets, cork-containing composite base materials, thermoplastic resin plates (resin plates containing polyvinyl chloride resin, polypropylene resin, polyethylene resin, acrylic resin, ABS resin, etc., as its main component or those obtained by foaming these resin plates), and the like. These decorative plate bases may be used singly, or two or more of these decorative plate bases may be combined and laminated for use.

Examples of coniferous trees include Sakhalin fir, Japanese larch, Yezo spruce, Japanese cedar, hinoki cypress, pine, sequoia, and Hondo spruce. Examples of broadleaf trees include lauan, Japanese linden, birch, castor aralia, Japanese beech, oak, and meranti. Examples of fast-growing trees include poplar, falcata, acacia, Kamerere, eucalyptus, and Terminalia.

When a plywood, such as a coniferous tree plywood, broadleaf tree plywood, or fast-growing plywood, is used, the number of laminated plywood layers (number of plies) is not limited. Typically, it is preferable that the number of plies be 3 to 7, and more preferably 5 to 7. The adhesive for use in producing plywood is also not limited. A wide range of known woodworking adhesives may be used. Examples of adhesives include adhesives containing, as an active ingredient, polyvinyl acetate, polyvinyl chloride, vinyl chloride-vinyl acetate copolymers, ethylene-acrylic acid copolymers, ionomers, butadiene-acrylonitrile rubber, neoprene rubber, and natural rubber. Examples also include heat-curable adhesives, such as melamine-based adhesives, phenol-based adhesives, and urea-based (e.g., vinyl acetate-urea-based) adhesives.

The cork sheet usable here is not only so-called natural cork, which is a highly elastic material obtained by peeling and processing the cork tissue of cork oak bark, but also so-called synthetic cork made to resemble cork. The cork sheet may be a single layer, or may be a laminate of cork sheets having different elastic moduli and/or densities.

Examples of the cork-containing composite base material include composite materials obtained by laminating and bonding a cork sheet and other materials (e.g., medium-density wood fiberboards and high-density wood fiberboards).

The thickness of the decorative plate base is not limited, and is preferably about 2 to 15 mm, and more preferably about 2 to 12 mm.

The method for laminating the hard-coat film or the adhesive-treated sheet and the decorative plate base is not limited. For example, a method of bonding each sheet with an adhesive can be used. Further, if the adhesive property of the adhesive-treated sheet is sufficient adhesion to the decorative plate base, a method of bonding the adhesive-treated sheet to the decorative plate base without using an adhesive can be used. The adhesive may be suitably selected from known adhesives according to, for example, the type of the adherend. Examples thereof include urethane, acrylic, urethane-acrylic, polyvinyl acetate, polyvinyl chloride, vinyl chloride-vinyl acetate copolymers, ethylene-acrylic acid copolymers, ionomers, butadiene-acrylonitrile rubber, neoprene rubber, and natural rubber. These adhesives may be used singly or in a combination of two or more.

### Examples

The present invention is described in detail below with reference to Examples, Comparative Examples, and Test Examples. However, the present invention is not limited to the contents shown in the Examples.

### Example 1

An 60-pm-thick colored polyvinyl chloride film was prepared as a base material sheet.

A printing ink containing an acrylic urethane-based resin, i.e., a printing ink for polyvinyl chloride films, was applied to the front surface of the base material sheet by gravure printing to a thickness of 2 µm, thereby forming a picture pattern layer.

On the picture pattern layer, a transparent polyvinyl chloride resin sheet with a thickness of 80 um was laminated as a transparent resin layer by thermal lamination, and at the same time, an embossed shape was formed from the front surface of the transparent resin layer.

The following composition for forming a crosslinked curable resin layer in the coating amount shown in Table 1 was applied to the front surface of the transparent resin layer by gravure reverse coating, and cured by heating with hot air and air-drying with a dryer to form a crosslinked curable resin layer with a thickness of 2.8 µm, thereby producing a hard-coat film.

### Composition for forming a crosslinked curable resin layer

- Base resin: FW-NT, acrylic polyol resin, produced by Showa Ink Manufacturing Co., Ltd., 100 parts by mass
- Curing agent: hexamethylene diisocyanate, 10 parts by mass
- Antiviral agent: silver-supported phosphoric acid-based glass particles (product number: PG-711, average particle size: 3 µm, produced by Koa Glass Co., Ltd., 7.5 parts by mass)

### Example 2

A 60-um-thick colored polypropylene film was prepared as a base material sheet.

A back-side primer layer (thickness: 2 µm) was formed on the back surface of the base material sheet, and a picture pattern layer was formed on the front surface of the base material sheet by gravure printing so as to have a thickness of 2 µm.

A transparent adhesive layer was formed on the picture pattern layer using a urethane-based resin so as to have a thickness of 2 µm.

A transparent polypropylene-based resin sheet was laminated by extrusion lamination on the transparent adhesive layer so as to have a thickness of 80 µm, thereby forming a transparent resin layer.

After a corona discharge treatment was applied to the front surface of the transparent resin layer, a primer layer was formed by applying a primer agent so as to have a thickness of 2 µm.

The following composition for forming a crosslinked curable resin layer in the coating amount shown in Table 1 was applied to the front surface of the primer layer by gravure coating. Then, an electron beam was irradiated using an electron beam irradiator in an environment with an oxygen concentration of 200 ppm or less under the conditions of an accelerating voltage of 165 KeV and 5 Mrad to cure the electron beam-curable resin, thereby forming a crosslinked curable resin layer with a thickness of 5.0 µm.

Immediately after the crosslinked curable resin layer side was heated with a non-contact infrared heater, embossing was performed by hot-pressing to form an uneven pattern, thereby producing a hard-coat film.

### Composition for forming a crosslinked curable resin layer

- Ionizing radiation-curable resin: a total of 100 parts by mass of urethane (meth)acrylate resin consisting of 35 parts by mass of polyfunctional urethane oligomer and 65 parts by mass of difunctional oligomer
- Antiviral agent: silver-supported phosphoric acid-based glass particles (product number: PG-711, average particle size: 3 µm, produced by Koa Glass Co., Ltd., 5.0 parts by mass)

### Example 3

A 60-um-thick colored polypropylene film was prepared as a base material sheet.

A back-side primer layer (thickness: 2 um) was formed on the back surface of the base material sheet, and a picture pattern layer was formed on the front surface of the base material sheet by gravure printing so as to have a thickness of 2 µm.

A transparent adhesive layer was formed on the picture pattern layer using a urethane-based resin so as to have a thickness of 2 µm.

A transparent polypropylene-based resin sheet was laminated by extrusion lamination on the transparent adhesive layer so as to have a thickness of 80 µm, thereby forming a transparent resin layer.

After a corona discharge treatment was applied to the front surface of the transparent resin layer, a primer layer was formed by applying a primer agent so as to have a thickness of 2 µm.

The following composition for forming a crosslinked curable resin layer in the coating amount shown in Table 1 was applied to the front surface of the primer layer by gravure coating. Then, an electron beam was irradiated using an electron beam irradiator in an environment with an oxygen concentration of 200 ppm or less under the conditions of an accelerating voltage of 165 KeV and 5 Mrad to cure the electron beam-curable resin to thus form a crosslinked curable resin layer with a thickness of 14.0 um, thereby producing a hard-coat film.

### Composition for forming a crosslinked curable resin layer

- A total of 100 parts by mass consisting of 30 parts by mass of aliphatic urethane(meth)acrylate with an isocyanurate skeleton and 70 parts by mass of aliphatic urethane(meth)acrylate with an alicyclic skeleton without an isocyanurate skeleton
- Antiviral agent: silver-supported phosphoric acid-based glass particles (product number: PG-711, average particle size: 3 µm, produced by Koa Glass Co., Ltd., 3.0 parts by mass)

### Example 4

A 60-um-thick colored polypropylene film was prepared as a base material sheet.

A back-side primer layer (thickness: 2 µm) was formed on the back surface of the base material sheet, and a picture pattern layer was formed on the front surface of the base material sheet by gravure printing so as to have a thickness of 2 µm.

A transparent adhesive layer was formed on the picture pattern layer using a urethane-based resin so as to have a thickness of 2 µm.

A transparent polypropylene-based resin sheet was laminated by extrusion lamination on the transparent adhesive layer so as to have a thickness of 80 µm, and at the same time, the product was cooled while embossing was performed by a press roll (hardness: 25) to form an embossed pattern.

After a corona discharge treatment was applied to the embossed surface, a primer layer was formed by applying a primer agent so as to have a thickness of 2 um.

The following composition for forming a crosslinked curable resin layer in the coating amount shown in Table 1 was applied to the front surface of the primer layer by gravure coating, followed by irradiation with ultraviolet rays (radiation amount: 200 mJ/m²). Accordingly, a crosslinked curable resin layer with a thickness of 40.0 µm was formed, thereby producing a hard-coat film.

### Composition for forming a crosslinked curable resin layer

- Urethane(meth)acrylate oligomer (UV-7550B, produced by The Nippon Synthetic Chemical Industry Co., Ltd.), 100 parts by mass
- Photoinitiator (Irgacure 184, produced by BASF), 10 parts by mass
- Antiviral agent: silver-supported phosphoric acid-based glass particles (product number: PG-711, average particle size: 3 µm, produced by Koa Glass Co., Ltd., 10.0 parts by mass).

### Example 5

A hard-coat film was produced in the same manner as in Example 3, except that silver-supported molybdenum oxide particles (average particle size: 3 µm, produced by SC Environmental Science Co., Ltd., product number: Neo Sintol AV-18F (abbreviated as "AV-18F" in the table)) in an amount of 0.5 parts by mass per 100 parts by mass of the crosslinked curable resin were used as the antiviral agent instead of the silver-supported phosphoric acid-based glass particles.

### Example 6

A hard-coat film was produced in the same manner as in Example 2, except that the composition for forming a crosslinked curable resin layer was additionally mixed with an anti-allergic anionic phenolic material (EXP20530A, produced by DIC Corporation) and an anti-allergic zinc-based material (EXP20530B, produced by DIC Corporation). The anionic phenolic material and the zinc-based material were mixed so that the solid content ratio of each material was 23 mass% in 100 mass% of the composition for forming a crosslinked curable resin layer.

### Example 7

A hard-coat film was produced in the same manner as in Example 2, except that the following composition for forming a crosslinked curable resin layer in the coating amount shown in Table 2 was applied by gravure coating to form a crosslinked curable resin layer with a thickness of 15.0 µm.

### Composition for forming a crosslinked curable resin layer

- Ionizing radiation-curable resin: a total of 100 parts by mass of urethane (meth)acrylate resin consisting of 30 parts by mass of polyfunctional urethane oligomer and 70 parts by mass of difunctional oligomer
- Antiviral agent: silver-supported molybdenum oxide particles (average particle size: 3 µm, produced by SC Environmental Science Co., Ltd., product number: Neo Sintol AV-18F, 0.5 parts by mass)

### Example 8

A hard-coat film was produced in the same manner as in Example 2, except that the following composition for forming a crosslinked curable resin layer in the coating amount shown in Table 2 was applied by gravure coating to form a crosslinked curable resin layer with a thickness of 15.0 um with a mixture of two kinds of antiviral agents.

### Composition for forming a crosslinked curable resin layer

- Ionizing radiation-curable resin: a total of 100 parts by mass of urethane (meth)acrylate resin consisting of 20 parts by mass of polyfunctional urethane oligomer and 80 parts by mass of difunctional oligomer
- Antiviral agents:
   silver-supported phosphoric acid-based glass particles (product number: PG-711, average particle size: 3 µm, produced by Koa Glass Co., Ltd., 2.0 parts by mass); and
   silver-supported molybdenum oxide particles (average particle size: 3 µm, produced by SC Environmental Science Co., Ltd., product number: Neo Sintol AV-18F, 0.3 parts by mass)

### Example 9

A hard-coat film was produced in the same manner as in Example 3, except that the formulations of the antiviral agents in the composition for forming a crosslinked curable resin layer in which two antiviral agents were mixed were as follows.
- Antiviral agents:
   silver-supported phosphoric acid-based glass particles (product number: PG-711, average particle size: 1 µm, produced by Koa Glass Co., Ltd., 3.0 parts by mass); and
   silver-supported phosphoric acid-based glass particles (product number: PG-711, average particle size: 3 µm, produced by Koa Glass Co., Ltd., 2.0 parts by mass)

### Example 10

A hard-coat film was produced in the same manner as in Example 2, except for the following. Specifically, in Example 2, the lower layer of a double-layer structure (the layer adjacent to the primer layer) was formed on the front surface of the primer layer by gravure coating by applying a coating agent for forming the second crosslinked curable resin layer shown in Table 2 (12.0 µm). This coating agent was obtained by mixing resin C without an alicyclic skeleton, which was a linear polyfunctional aliphatic urethane(meth)acrylate, and resin B with an alicyclic skeleton without an isocyanurate skeleton, so that the resulting second crosslinked curable resin layer had a nanoindentation hardness of 140 MPa, the coating agent further comprising an antiviral agent. Next, the upper layer of the double-layer structure (the layer present on the front surface of the lower layer) was formed by gravure coating by applying a coating agent for forming the first crosslinked curable resin layer shown in Table 2 (15.0 µm). This coating agent was obtained by mixing an ionizing radiation-curable resin with resin A with an isocyanurate skeleton and resin B with an alicyclic skeleton without an isocyanurate skeleton, so that the resulting first crosslinked curable resin layer had a nanoindentation hardness of 240 MPa, the coating agent further comprising a hydrophobized inorganic filler in an amount of 20 parts by mass per 100 parts by mass of the resin components, and an antiviral agent. Next, an electron beam was irradiated using an electron beam irradiator in an environment with an oxygen concentration of 200 ppm or less under the conditions of an accelerating voltage of 165 KeV and 5 Mrad to cure the electron beam-curable resin, thereby forming a second crosslinked curable resin layer with a thickness of 12.0 µm and a first crosslinked curable resin layer with a thickness of 15.0 µm.

Resin A was an aliphatic urethane(meth)acrylate with an isocyanurate skeleton formed from a trimer of hexamethylene diisocyanate, resin B was a PG-modified diacrylate (without an isocyanurate skeleton) of hydrogenated dicyclohexylmethane diisocyanate (hydrogenated MDI), and resin C was pentaerythritol-based polyfunctional acrylate (without an isocyanurate skeleton and an alicyclic skeleton).
- Antiviral agents:
   silver-supported phosphoric acid-based glass particles (product number: PG-711, average particle size: 3 µm, produced by Koa Glass Co., Ltd., 2.0 parts by mass); and
   silver-supported molybdenum oxide particles (average particle size: 3 µm, produced by SC Environmental Science Co., Ltd., product number: Neo Sintol AV-18F, 0.1 parts by mass)

### Example 11

A hard-coat film was produced in the same manner as in Example 1, except that the amount of the antiviral agent in the crosslinked curable resin layer was changed to the amount shown in Table 2.

### Comparative Example 1

A hard-coat film was produced in the same manner as in Example 1, except that the amount of the antiviral agent in the crosslinked curable resin layer was changed to the amount shown in Table 3.

### Comparative Example_2

A resin composition obtained by mixing 0.5 parts by mass of a hindered phenolic antioxidant (Irganox 1010, produced by BASF), 0.5 parts by mass of a triazine-based ultraviolet absorber (Cyasorb UV-1164, produced by Sunchem), and 0.5 parts by mass of an NOR light stabilizer (Tinuvin XT850 FF, produced by BASF), per 100 parts by mass of a highly crystalline homopolypropylene resin was melted and extruded using an extruder to form a sheet-like transparent resin layer formed of a transparent, highly crystalline polypropylene sheet with a thickness of 100 µm. The Martens hardness of the transparent resin layer was set to 70 N/mm² by controlling the temperature during extrusion. The obtained transparent resin layer was subjected to corona treatment on both sides so that the wetting tension was 40 dyn/cm or more.

A picture pattern layer was formed by printing a pattern by gravure printing on a 80-um-thick polyethylene sheet having concealing properties (base material sheet) using a two-component urethane ink (V180, produced by Toyo Ink Co., Ltd.). Further, primer coating was performed on the back surface of the base material sheet.

Next, the transparent resin layer was bonded by dry lamination to the picture pattern layer of the base material sheet via an adhesive for dry lamination (Takelac A540, produced by Mitsui Chemicals, Inc., coating amount: 2 g/m²), and an embossed pattern was formed on the surface of transparent resin layer.

The following compositions for forming a surface-protecting layer, i.e., the thermosetting composition (coating amount on a dry basis (film thickness after drying: 5 µm) and the photocurable composition (film thickness after drying: 5 µm)), were sequentially laminated on the embossed transparent resin layer to form a surface-protecting layer consisting of two layers of a thermosetting layer (lower layer) and a photocurable layer (upper layer), thereby producing a hard-coat film with a total thickness of 195 µm.

### Thermosetting Composition

The thermosetting composition was prepared by mixing the following polyol solution A with the following curing agent, gloss modifier, ultraviolet absorber, and light stabilizer.

### - Polyol solution A

Methyl methacrylate (80 g) and 2-hydroxyethyl methacrylate (20 g) were placed in a four-necked flask equipped with a stirrer, a nitrogen-inlet tube, and a reflux condenser tube, and 100 g of ethyl acetate was added thereto to dissolve the mixture. The resulting mixture was stirred in an oil bath under a nitrogen atmosphere. Polymerization was initiated by adding 0.2 g of α,α'-azobisisobutyronitrile to the mixture, and heating and stirring were continued for 5 hours in an oil bath at 60°C to obtain a colorless, viscous polyol solution A.
Amount: 80 parts by mass
   - Curing agent
Product name: Duranate TPA-100 (produced by Asahi Kasei Corporation)
Amount: 5 parts by mass
   - Gloss modifier (inorganic particles)
Product name: Sylophobic 702 (produced by Fuji Silysia Chemical, Ltd.)
Properties: amorphous, average particle size: 4 µm, oil absorption: 170 mL/100 g
Amount: 10 parts by mass
   - Ultraviolet absorber
Product Name: Tinuvin 400 (produced by BASF)
Amount: 5 parts by mass
   - Light Stabilizer
Product name: Tinuvin 123 (produced by BASF)
Amount: 2 parts by mass
   - Diluent solvent
Product Name: ethyl acetate
Amount: 50 parts by mass

### Photocurable Composition

The photocurable composition was prepared by mixing the following ultraviolet (UV)-curable resin with the following antiviral agent, photoinitiator, gloss modifier, and light stabilizer.
- UV resin

Product name: UA-33H
Properties: weight average molecular weight: 1400, number of functional groups: 9
Amount: 90 parts by mass
   - Antiviral agent
Silver-containing inorganic particles (average particle size: 5 µm, produced by Taisho Technos Co., Ltd., product number: TB-B100)

The silver-containing inorganic particles with an average particle size of 5 µm (0.1 parts by mass) were added to an acrylic-based resin composition. The active ingredient of the antiviral agent was supported on a carrier (inorganic material), and the particle size of the antiviral agent varied according to the particle size of the carrier.. In Comparative Example 2, the antiviral agent had a particle size of 3 µm for the first peak and 7 um for the second peak, and the average particle size was thus 5 um as stated above.
- Photoinitiator

Product name: Irgacure 184
Amount: 8 parts by mass
   - Gloss modifier (inorganic particles)
Product name: Sylophobic 702 (produced by Fuji Silysia Chemical, Ltd.)
Properties: amorphous, average particle size: 4 um, oil absorption: 170 mL/100 g
Amount: 10 parts by mass
   - Light Stabilizer
Product name: Tinuvin123 (produced by BASF)
Amount: 2 parts by mass
   - Diluent solvent
Product Name: ethyl acetate
Amount: 60 parts by mass

### Test Example 1

The hard-coat films produced in Examples 1 to 5 and 7 to 11 and Comparative Examples 1 to 2 were evaluated in terms of the silver ion concentration determined by ICP-OES measurement and the antiviral performance. The measurement method and evaluation method are as follows.

### ICP-OES Measurement

Each of the hard-coat films produced in the Examples and the Comparative Examples was cut into a size of 10 cm × 10 cm to obtain a test piece, and the test piece was placed in a polypropylene bag containing 50 ml of ultrapure water. After heating in a constant-temperature bath at 40°C for 1 hour, ultrapure water was removed, and the silver ion concentration was determined by ICP-OES measurement.

### Antiviral Performance

An antiviral performance test was performed on the hard-coat films produced in the Examples and Comparative Examples by a method according to the antiviral test method (ISO 21702), and the antiviral activity values against the following virus species were evaluated based on the following evaluation criteria. The evaluation criteria are as follows.
Virus species: enveloped virus (influenza virus), non-enveloped virus (feline calicivirus)
++: the antiviral activity values against the two virus species were both 2.0 or more
+: the antiviral activity value against one of the virus species was 2.0 or more
-: the antiviral activity values against the two virus species were both less than 2.0

Tables 1 to 3 below show the results.

**Table 1**

| | Ex. 1 | Ex. 2 | Ex. 3 | ' Ex. 4 | Ex. 5 |
|---|---|---|---|---|---|
| Crosslinked curable resin (surface-protecting layer) | Acrylic-based, two-component curable resin | Electron beam-curable resin | Electron beam-curable resin | UV-curable urethane resin | Electron beam-curable resin |
| Thickness of crosslinked curable resin layer (µm) | 2.8 | 5.0 | 14.0 | 40.0 | 14.0 |
| Silver-containing inorganic particle (antiviral agent) | PG-711 3 µm | PG-711 3 µm | PG-711 3 µm | PG-711 3 µm | AV-18F 3µm |
| Content of silver-containing inorganic particle (antiviral agent) (parts by mass per 100 parts by mass of the crosslinked curable resin) | 7.5 | 5.0 | 3.0 | 10.0 | 0.5 |
| Silver ion concentration determined by ICP-OES measurement (µg/cm²) | 0.363 | 0.197 | 0.244 | 0.300 | 0.086 |
| Antiviral performance | ++ | ++ | ++ | ++ | + |

**Table 2**

| | Ex. 7 | Ex. 8 | Ex. 9 | Ex. 10 | Ex. 11 |
|---|---|---|---|---|---|
| Crosslinked curable resin (surface-protecting layer) | Electron beam-curable resin | Electron beam-curable resin | Electron beam-curable resin | Electron beam-curable resin | Acrylic-based, two-component curable resin |
| Thickness of crosslinked curable resin layer (µm) | 15.0 | 15.0 | 14.0 | Upper layer 15.0 | 2.8 |
| | | | | Lower layer 12.0 | |
| Silver-containing inorganic particle (antiviral agent) | AV-18F 3 µm | PG-711 *1 3 µm) | PG-711 *1 1 µm | Upper layer. PG-711 3 µm | PG-711 3 µm |
| | | AV-18F *2 3 µm | PG-711 *2 3 µm | Lower layer. AV-18F 3 µm | |
| Content of silver-containing inorganic particle (antiviral agent) (parts by mass per 100 parts by mass of the crosslinked curable resin) | 0.5 | 2.0*1 | 3.0*1 | Upper layer 2.0 | 5.0 |
| | | 0.3 *2 | 2.0*2 | Lower layer 0.1 | |
| Silver ion concentration determined by ICP-OES measurement (µg/cm²) | 0.020 | 0.022 | 0.400 | 0.060 | 0.049 |
| Antiviral performance | + | + | ++ | + | + |

**Table 3**

| | Comp. Ex. 1 | Comp. Ex. 2 |
|---|---|---|
| Curable resin (surface-protecting layer) | Acrylic-based, two-component curable resin | Upper layer. UV-curable resin |
| | | Lower layer: thermosetting resin |
| Thickness of curable resin layer (µm) | 5.0 | Upper layer. 5.0 |
| | | Lower layer. 5.0 |
| Silver-containing inorganic particle (antiviral agent) | PG-711 3 µm | Upper layer: TB-B100 5 µm |
| | | Lower layer: not contained |
| Content of silver-containing inorganic particle (antiviral agent) (parts by mass per 100 parts by mass of the curable resin) | 3.0 | Upper layer. 0.1 |
| | | Lower layer: 0 |
| Silver ion concentration determined by ICP-OES measurement (µg/cm²) | 0.016 | 0.010 |
| Antiviral performance | - | - |

### Test Example 2

The following physical properties of the hard-coat films produced in Examples 2 and 6 were examined.

### Anti-allergenic Performance

The anti-allergenic performance of the hard-coat films produced in Examples 2 and 6 was evaluated. Specifically, the hard-coat films produced in Example 2 and Example 6 were each finely cut and immersed in an aqueous mite allergen solution for 1 day, and the amount of allergen was then visually confirmed by horizontal development chromatography (Mighty Checker) and evaluated according to the following evaluation criteria. The evaluation criteria are as follows.
+: A decrease in the amount of allergen was confirmed (mite allergen level determination was equal to or below + determination (i.e., about 100 mites/m² or less))
-: A decrease in the amount of allergen was not confirmed (mite allergen level determination exceeded + determination)

Table 4 shows the results.

**Table 4**

| | Example 2 | Example 6 |
|---|---|---|
| Anti-allergenic performance | - | + |

From the difference in the color density of the checker, it was confirmed that the hard-coat film of Example 6 had anti-allergenic performance in comparison with the hard-coat film of Example 2.

### Description of the Reference Numerals

- 1.: Antiviral hard-coat film
- 2.: Base material sheet
- 3.: Picture pattern layer
- 4.: Transparent adhesive layer
- 5.: Transparent resin layer
- 6.: Primer layer
- 7.: Crosslinked curable resin layer (surface-protecting layer)
- 8.: Back-side primer layer
- 9.: Silver-containing inorganic particles (antiviral agent)
- 10.: Adhesive sheet
- 11.: Antiviral adhesive-treated sheet
- 12.: Decorative plate base
- 13.: Antiviral decorative plate

## Claims

1. An antiviral hard-coat film comprising a crosslinked curable resin layer in an outermost layer,
wherein
(1) the crosslinked curable resin layer contains a cured product of a crosslinked curable resin and silver-containing inorganic particles; and
(2) the hard-coat film has a silver ion concentration measured by ICP-OES measurement of 0.018 µg/cm² or more.

2. The antiviral hard-coat film according to claim 1, wherein the crosslinked curable resin contains a two-component curable urethane-based resin.

3. The antiviral hard-coat film according to claim 1, wherein the crosslinked curable resin contains an ionizing radiation-curable resin.

4. The antiviral hard-coat film according to any one of claims 1 to 3, wherein the silver-containing inorganic particles have an average particle size of 1 um or more and 12 µm or less.

5. The antiviral hard-coat film according to any one of claims 1 to 4, wherein the silver-containing inorganic particles are silver-supported glass particles.

6. The antiviral hard-coat film according to claim 5, wherein the silver-supported glass particles contain phosphoric acid as a glass component.

7. The antiviral hard-coat film according to any one of claims 1 to 4, wherein the silver-containing inorganic particles are silver-supported molybdenum oxide particles.

8. The antiviral hard-coat film according to any one of claims 1 to 7, wherein the silver-containing inorganic particles are present in an amount of 1 part by mass or more and 10 parts by mass or less per 100 parts by mass of the crosslinked curable resin.

9. The antiviral hard-coat film according to any one of claims 1 to 8, wherein the silver ion concentration of the hard-coat film measured by the ICP-OES measurement is 0.50 µg/cm² or less.

10. The antiviral hard-coat film according to any one of claims 1 to 9,
wherein
the hard-coat film comprises a laminate comprising at least a base material sheet and/or a transparent thermoplastic resin layer and a crosslinked curable resin layer in sequence in the thickness direction, and
the base material sheet and/or the transparent thermoplastic resin layer contain a thermoplastic resin as a resin component.

11. The antiviral hard-coat film according to claim 10, wherein the thermoplastic resin is at least one member selected from the group consisting of polyvinyl chloride and polyolefins.

12. The antiviral hard-coat film according to any one of claims 1 to 11, wherein the crosslinked curable resin layer has a thickness of 1 µm or more and 50 µm or less.

13. The antiviral hard-coat film according to any one of claims 1 to 12, wherein the crosslinked curable resin layer further comprises at least one member selected from the group consisting of an antiviral agent and an anti-allergen agent.

14. The antiviral hard-coat film according to any one of claims 1 to 13, wherein the crosslinked curable resin layer further contains inorganic antiviral particles and/or organic antiviral particles, which are different from the silver-containing inorganic particles.

15. The antiviral hard-coat film according to any one of claims 1 to 14, wherein the silver-containing inorganic particles have one or more particle size peaks.

16. The antiviral hard-coat film according to claim 14 or 15, wherein mixed particles of the silver-containing inorganic particles and the inorganic antiviral particles and/or organic antiviral particles have one or more particle size peaks.

17. The antiviral hard-coat film according to any one of claims 10 to 16, further comprising a picture pattern layer.

18. The antiviral hard-coat film according to any one of claims 1 to 17, having an embossed uneven pattern from the outermost surface side.

19. The antiviral hard-coat film according to any one of claims 3 to 18, wherein the ionizing radiation-curable resin is a resin mixture comprising an urethane(meth)acrylate oligomer (A) in an amount of 65 wt% or more and 95 wt% or less, and an aliphatic urethane(meth)acrylate oligomer (B) in an amount of 5 wt% or more and 35 wt% or less,
the urethane(meth)acrylate oligomer (A) having 2 radically polymerizable unsaturated groups per molecule and having a weight average molecular weight of 1000 to 3000, and
the aliphatic urethane(meth)acrylate oligomer (B) having 3 to 15 radically polymerizable unsaturated groups per molecule.

20. The antiviral hard-coat film according to any one of claims 3 to 18, wherein the ionizing radiation-curable resin contains two kinds of aliphatic urethane(meth)acrylates of resin A and resin B, wherein the resin A is an aliphatic urethane(meth)acrylate with an isocyanurate skeleton, and the resin B is an aliphatic urethane(meth)acrylate with an alicyclic skeleton without an isocyanurate skeleton.

21. The antiviral hard-coat film according to claim 20, wherein the alicyclic skeleton is at least one of isophorone and cyclohexane.

22. The antiviral hard-coat film according to any one of claims 1 to 21, comprising a back-side primer layer.

23. An antiviral adhesive-treated sheet comprising a laminate, the laminate comprising at least an adhesive sheet and the antiviral hard-coat film according to any one of claims 1 to 22 in sequence in the thickness direction.

24. An antiviral decorative plate comprising a laminate, the laminate comprising a decorative plate base, and the antiviral hard-coat film according to any one of claims 1 to 22 or the antiviral adhesive-treated sheet according to claim 23 in sequence in the thickness direction.
